# EUROPEAN PATENT APPLICATION

(11) **EP 0 555 969 A1**
(43) Date of publication of application: **18.08.1993**
(21) Application number: 93300559.7
(22) Date of filing: 27.01.1993
(51) Int. Cl.: G11B 5/48

(54) **Directly welded load beam flexure assembly**

(30) Priority: 13.02.1992 US 835168
(71) Applicant: SEAGATE TECHNOLOGY INTERNATIONAL, Georgetown Grand Cayman Island (KY)
(72) Inventor: Jabbari, Iraj, San Jose, California 95125 (US); Hickox, Thomas A., Scotts Valley, California 95062 (US)
(74) Representative: Sturt, Clifford Mark

(57) **Abstract**

A disc drive actuator load beam 25 is directly welded to a stainless steel arm 248. The direct welding eliminates the need for swage plates having swage bosses and permits reduced arm thickness. This, in turn, accommodates reduced disc spacing.

## Description

The present invention relates to a directly welded load beam flexure assembly in a magnetic disc drive and more particularly to, but not exclusively to, rotary actuator suspension systems therefor.

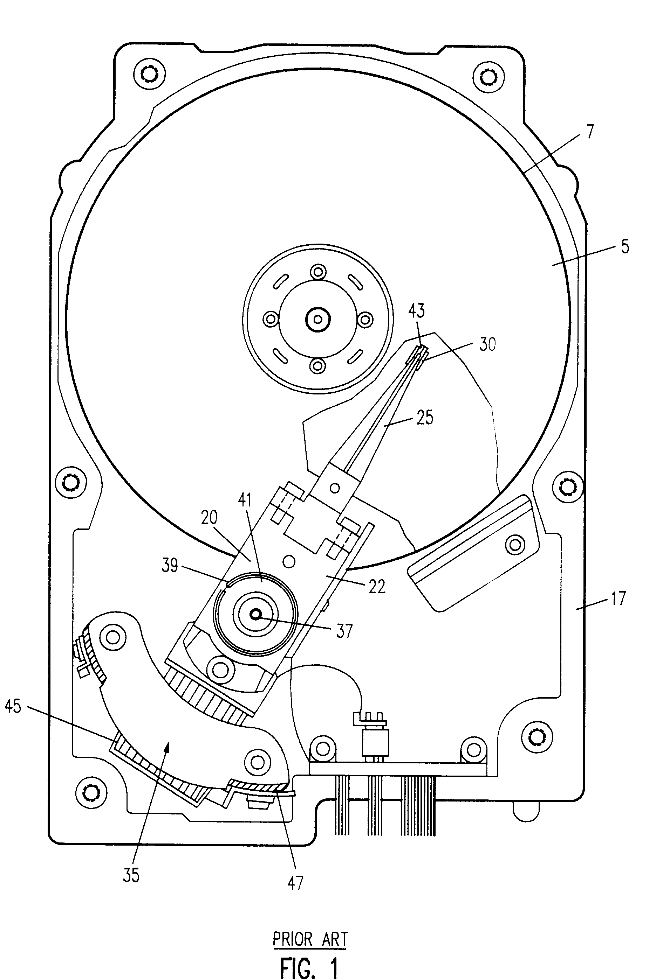

Most small form factor disc drives (Figure 1) today employ rotary actuators 22 to support the drive's magnetic heads 30 as the heads fly over the rotating surfaces 5 of the disc drive magnetic discs 7. Such rotary actuators essentially comprise an electric motor 35, a fixed shaft 37, a hub 39 rotatably mounted on the fixed shaft through a bearing system 41, a plurality of arms 20 extending from the hub, one or sometimes, two flexible load beams 25 mounted on the end of the arm extending in line from the respective arms and a gimbal 43 attached to the end of each load beam. A magnetic head 30 is attached to the gimbal 43.

In most cases - especially with voice coil rotary actuators - the motor comprises a coil 45 fixedly attached to the actuator hub which magnetically interacts with one or more magnets 47 fixedly mounted on the drive casing 17.

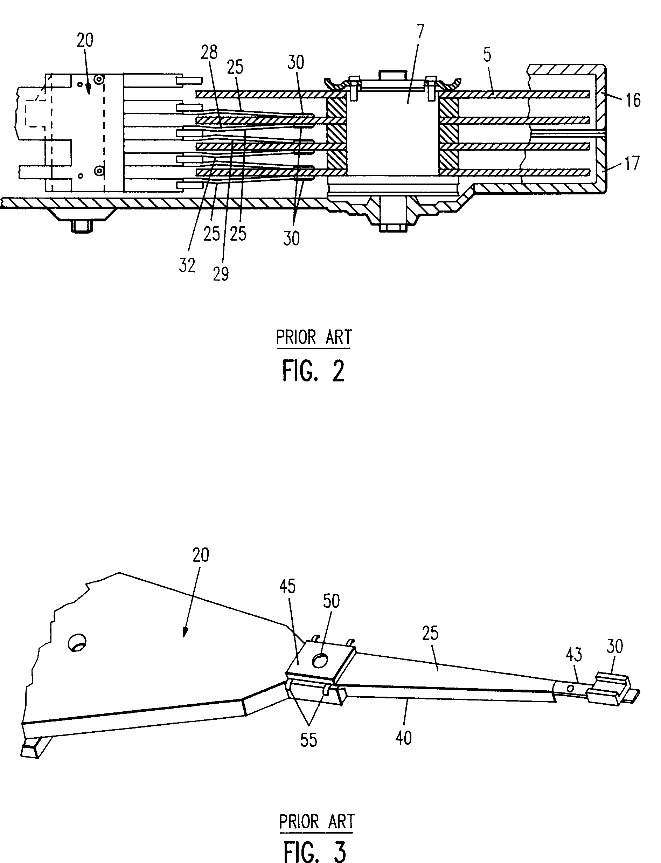

The disc drive typically has a vertical stack of two or more discs 7. (See Figure 2.) The rotary actuator 22 is designed such that a portion of the arms 20, load beams 25 and the magnetic heads 30 extend into the spaces between the surfaces 5.

Another, and currently preferred, structure for the prior art arm and load beam assembly is shown in Figure 3. This figure shows aluminium arm 20 to which a stainless steel load beam 25 is attached by means of a swage plate 45 having an integral swage boss 50. Typically, the swage plate 45 is welded to the load beam 25 through a plurality of welds aligned in a pattern to support the load beam against virtual bending forces and side to side acceleration. Arm 20 is part of a unitary hub (not shown) formed by extrusion. Such structures are commonly known as E-blocks. In practice, all loads beams are simultaneously swayed to their respective arms.

Also shown in this figure are wire attachment tabs 55 and head 30. Head 30 has a transducer, not shown, which will be operative when facing a disc, as in Figures 1 and 2.

When a pair of these preferred load beams are attached to a single arm (see Figure 2), one 28 will have its head's transducer facing upwards and the other 29 facing downwards. Because the end of the arm must fit between the discs 7, the stack height of two swage plates 45 and two swage bosses 50 becomes a limiting factor to closer disc spacing.

According to the present invention there is provided a disc drive actuator load beam characterised by being directly welded to a disc drive actuator arm.

The present invention comprises directly welding a load beam onto an arm composed of a material with substantially the same coefficient of thermal expansion as that of the load beam. Preferably the weld patterns are similar to the weld patterns for attaching the load beam to the swage plate.

The direct welding of the load beam to the arm eliminates the stack height problems of both the swage plate and the swage boss. The welding of the stainless steel load beam to the stainless steel arm eliminates warping between the load beam and the arm caused by thermal mismatch between welded components.

Embodiments of the present invention will now be described with reference to the accompanying drawings, of which:
Figure 1 is a top view of a prior art disc drive with its top cover removed;
Figure 2 is a cross-section of the aforementioned disc drive;
Figure 3 is a perspective view of a preferred prior art load beam and arm assembly;
Figure 4 is a perspective view of a load beam and arm according to the present invention;
Figure 5 is a perspective view of the complete rotary actuator assembly according to the present invention;
Figure 6 is an exploded view of Figure 5; and
Figure 7 is an illustration of the respective arrangements of rotary actuators and disc stacks according to the preferred embodiment.

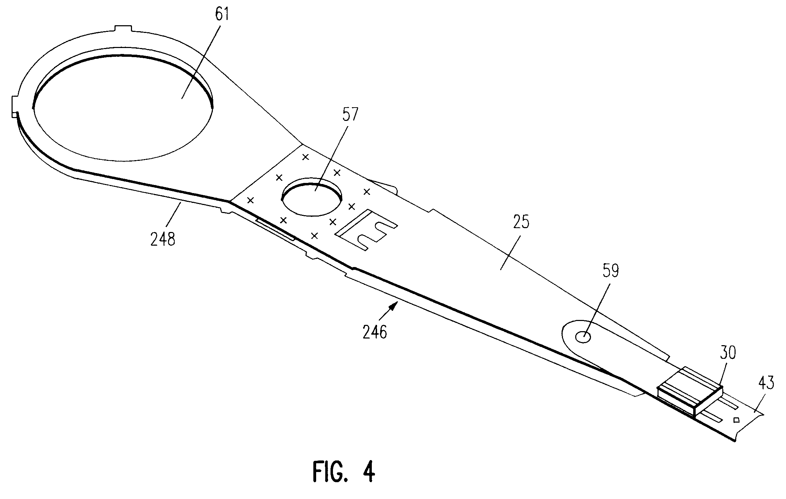

Figure 4 is a perspective view of the preferred embodiment of the present invention. A conventional flexure assembly comprising stainless steel load beam 25 and gimbal spring 43 to which head 30 may be mounted is attached to stainless steel arm 248 by means of a plurality of spot welds. The spot welds form a pattern substantially as shown in the figure. Preferably four spot welds are formed in a line across the front of the attachment area and three along each side. The front corner welds form a part of both the front row and the side rows respectively. This pattern of welds provides the necessary rigidity both with respect to bending motions of the load beam (up and down in the figure) and resistance to torsional forces caused by servoing the actuator assembly back and forth.

The arm portion 248 is composed of stainless steel. This matches its coefficient of thermal expansion with that of stainless steel load beam 25. Without the thermal matching, the heating of the structure which is normal during drive operation would cause warping of the structure at the welds. This warping would cause significant misalignment of the heads over disc recording tracks.

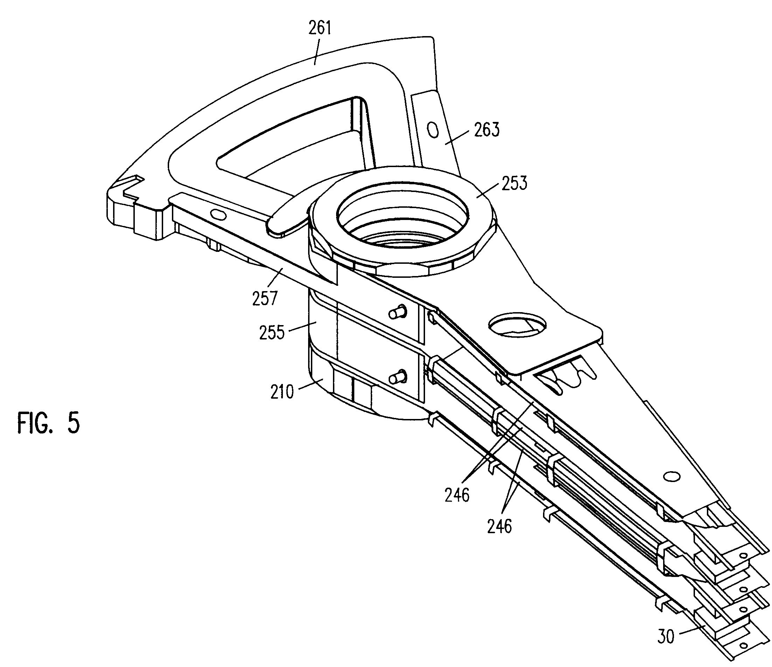

As shown in the figure, both the load and arm have a corresponding aperture 57. The purpose of this aperture is for an alignment tool to line up the respective arms and load beams during two manufacturing steps;
In a first step both the arm and load beam are aligned relative to one another using apertures 61, 57 and 59. Then the aligned combination is welded together. The preferred welding method is laser spot welding.
As can be appreciated by those skilled in the art, alternative alignment aperture than those discussed herein can be provided.
During a second manufacturing step, the arms are stacked with spacers on the rotary actuator hub (Figure 5), aligned through a tool passing through apertures 57, and then clamped by clamp 210.

As shown in the figure, the arm 248 includes an aperture 61 for mounting it over the hub of the rotary actuator. An alternative structure, not shown here, would comprise the aperture 61 forming only a semi-circle so that the arm may be fitted into slots or grooves in the hub rather than slid over the top of the hub.

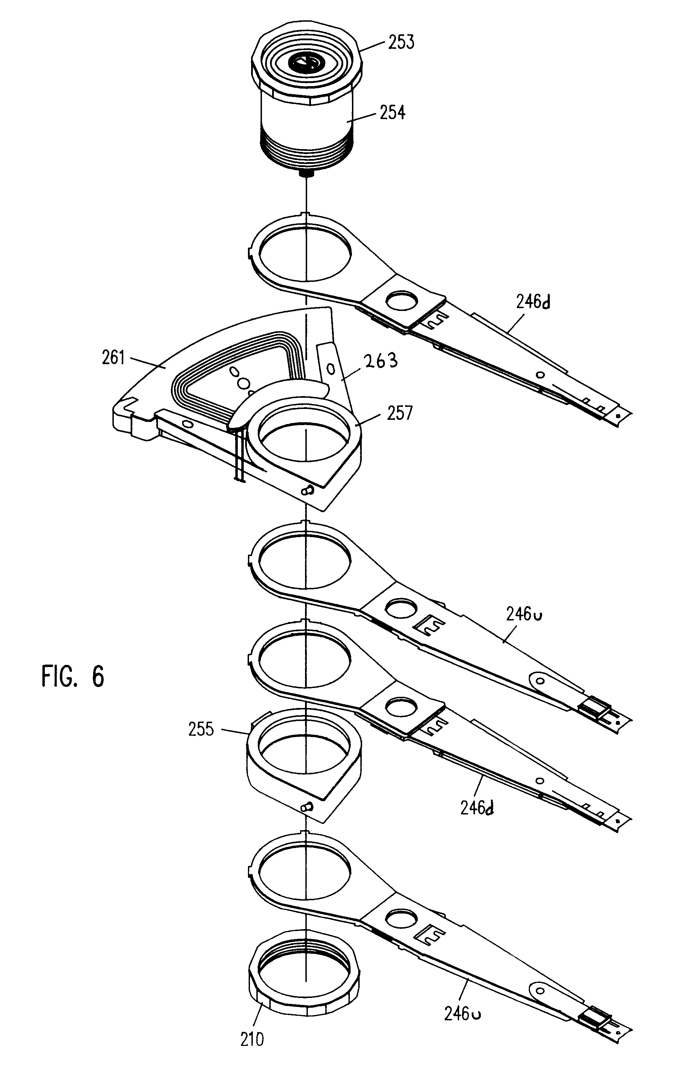

Figure 5 shows a preferred rotary actuator structure according to the present invention in which a plurality of load beam/arms are combined into an assembly substantially shown in the figure. As shown in the figure the assembly comprises four arm load beam/arm assemblies 246 mounted on a stainless steel, rotary actuator hub 254 (Figure 6) substantially as follows:

The hub comprises a tube having a flange 253 onto which a first, downward-facing arm load beam assembly 246d is slid;

Next comes a stainless steel, annular spacer 257/yoke 263 which extends away from the hub in a direction opposite that of the arms;

The purpose of this yoke is to mount a coil assembly 261 which is part of the magnetic circuit of the voice coil actuator shown in Figure 1;

On top of this first upward-facing arm/load beam assembly 246u is placed;

On top of this a second downward-facing arm/load beam assembly 246d is placed;

On top of that, a second spacer 257 is placed;

On top of that, a second, upward-facing arm/load beam assembly 246u is placed;

And on top of that, a clamp 210, preferably composed of stainless steel, is preferably screwed onto the hub 253 and provides a clamping force for the entire assembly.

Figure 6 shows the same elements described in connection with Figure 5 in blow up.

The respective arms in order have their head's transducers arranged to face first up, then down, then up and then down. This arrangement will provide operational heads for two discs, substantially as shown in Figure 2.

As mentioned above, the respective arm/load beam assemblies 246 are aligned relative to one another before clamping by means of the respective apertures 61 and 57.

With this structure, disc spacing is now limited primarily by the thickness of the respective heads 30 and not by the stack height of two swage plate/bosses.

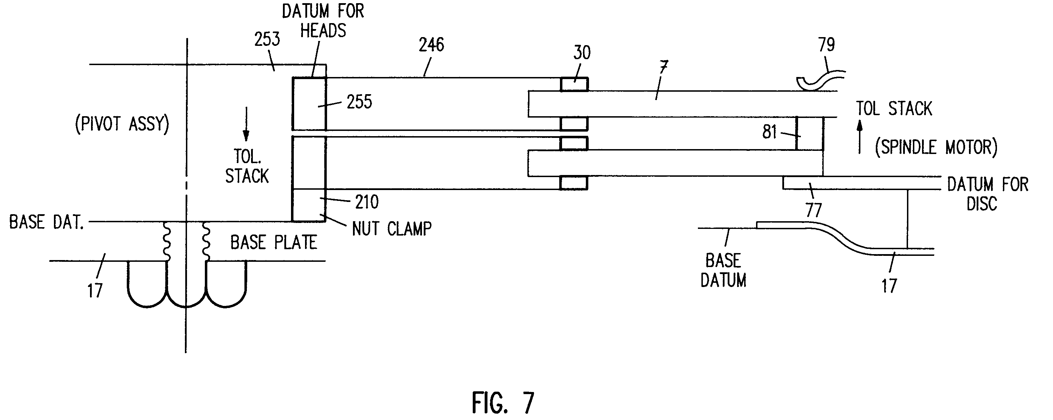

A disc drive constructed with the preferred actuator is arranged according to Figure 7. From this figure, one can see that the tolerance on the top disc surface is determined by:
a) the motor flange position (indicated as DATUM FOR DISC in the figure);
b) the bottom disc thickness;
c) the disc spacer, and
d) the top disc thickness.

Whereas the tolerance on the top head position is merely determined by the pivot flange position (indicated as DATUM FOR THE HEADS in the figure). In this arrangement the disc's stack from the bottom up and the heads stack from the top down creating off setting tolerance stacks. That is to say the tolerance stackup of the respective elements and disc stack is reversed. Thus, by creating off setting tolerance stacks the most accurate head position mates with the least accurate disc surface and the least accurate head position mates with the most accurate disc surface. This reduces overall tolerance build-up between the two interfacing structures.

In the figure, actuator flange 253 is located at a known position relative to base 17. Clamp 210 clamps the arms 246 and spacers 255 on the flange.

Likewise, disc spindle flange 77 is located at a known position relative to base plate 17. Discs 7 and spacers 81 are clamped on the flange by disc clamp 79.

The aforegoing description has been given by way of example only and it will be appreciated by a person skilled in the art that modifications may be made without departing from the scope of the present invention.

## Claims

1. A disc drive actuator load beam (25) characterised by being directly welded to a disc drive actuator arm (248).

2. Apparatus according to claim 1, wherein the material of the arm has a coefficient of thermal expansion substantially the same as that of the load beam.

3. Apparatus according to claims 1 or 2, wherein the load beam contacts the arm in an area having a front end comprising the furthermost end of the arm and the weld comprises of a plurality of spot welds aligned in a first row substantially parallel to the front end, and in two spaced rows each of which are substantially perpendicular to the first row.

4. Apparatus according to claim 3, wherein the first row comprises four spot welds.

5. Apparatus according to claim 4, wherein each of the two spaced rows comprise three spot welds including one of the spot welds of the first row.

6. Apparatus according to claim 5, wherein each of said spot welds included in the spaced rows comprise the end spots of the first row.

7. Apparatus according to any one of the preceding claims, wherein the arm includes an integral annular ring at one end.

8. Apparatus according to claim 7, further including a hub (254) composed of a material with substantially the same coefficient of thermal expansion as the arm over which at least one of said arms is mounted through the annular ring.

9. Apparatus according to claim 8, further including an annular spacer (255) arranged about said hub and separating two of said arms.

10. Apparatus according to claim 9, further including clamp means (210) for clamping said arms and spacers together about said hub.

11. Apparatus according to any one of claims 8 to 10, further including yoke means (263) for mounting a coil means (261), the yoke means composed of a material with substantially the same coefficient of thermal expansion as the arm and including an annular ring for mounting the yoke around said hub.

12. Apparatus according to claim 11, wherein said hub includes a flange (253) and said arms, spacers, clamps and yoke means are arranged on the hub relative to the flange in order; arm, yoke means, arm, arm, spacer, arm, clamp.

13. Apparatus according to claim 12, wherein said load beams have gimbal means (43) mounted at one end opposite the end at which the load beam is mounted on the arm, and further including head means (30) mounted on said gimbal means with the head means transducer facing in a direction; and the respective arms are mounted on said that such that the centermost two heads have their transducers facing in opposite directions.

14. Apparatus according to claim 12, further including a disc drive base (17) with a disc drive spindle (77) having a flange and a plurality of discs (7) mounted on the flange about the spindle, means for locating the rotary actuator flange at a known position relative to the base and means for locating the disc stack flange relative to the base in such a manner that tolerance stackup of the respective structures build in opposite directions and are offsetting.
